Europäisches Patentamt

(19) European Patent Office

Office européen des brevets

(11) Publication number: **0 353 644**
**A2**

## (12) EUROPEAN PATENT APPLICATION

(21) Application number: **89113939.6**

(51) Int. Cl.⁴: **G06F 15/70**

(22) Date of filing: **28.07.89**

(30) Priority: **04.08.88 US 228612**

(43) Date of publication of application:
**07.02.90 Bulletin 90/06**

(84) Designated Contracting States:
**DE FR GB IT NL**

(71) Applicant: **SCHLUMBERGER TECHNOLOGIES INC**
**2702 Orchard Parkway PO Box 32070**
**San Jose, CA 95152(US)**

(72) Inventor: **Nishihara, H. Keith**
**1468 Richardson Avenue**
**Los Altos California 94022(US)**

(74) Representative: **Sparing Röhl Henseler**
**Patentanwälte European Patent Attorneys**
**Rethelstrasse 123**
**D-4000 Düsseldorf 1(DE)**

(54) **Configurable correlation windows for the direct measurement of differential field distortion.**

(57) Area correlation of images or regions of images may be used directly to measure field distortion such as rotation, expansion, or shear, once translation disparities are removed between a pair of images. A method is disclosed for allowing relative field distortions to be applied between a pair of image regions as they are correlated. In binocular stereo, the method enables measurement of elevation gradients and surface curvatures. In motion analysis, the method enables the direct measurement of flow field parameters, while in template matching, rotation and magnification may be measured without the necessity of multiple templates for the same object.

FIG._1.

EP 0 353 644 A2

# CONFIGURABLE CORRELATION WINDOWS FOR THE DIRECT MEASUREMENT OF DIFFERENTIAL FIELD DISTORTION

## BACKGROUND OF THE INVENTION

### Field of the Invention

This invention relates to an image processing system for measuring and correlating field distortions such as rotation, expansion or shear, typically after translation disparities have been removed between a pair of image regions. The system allows relative field distortions to be applied between a pair of image regions as correlations between the regions are performed.

### Description of the Prior Art

A common problem in image processing is the comparison of two images such as a stored template and an acquired image. A frequent goal of such comparisons is to determine whether the two images "match," or if they do not, to determine the angle of rotation, amount of magnification, extent of shear, or, more generally, the field distortion between the two images. Such comparisons are termed "area" correlations herein. Area correlations can be measured against parameters such as rotation or magnification to determine the values of those parameters that give the best agreement between images, thereby providing quantitive information about the two images. The principal difficulty with making such measurements is the requirement that one of the two images must be distorted, for example, by rotating, expanding, or shearing it by various amounts relative to the other image. In template matching the particular distortion's effect on the template is precomputed, and the new distorted template is stored as another template. This approach, however, is computationally expensive when many template types are used. For example, in raster scan matching of images, a separate template is stored for each possible rotational view of the object. Thus, depending upon the accuracy desired, many images must be stored for comparison with the acquired image. Furthermore, this approach cannot be used at all for applications such as stereo matching and motion analysis where both compared images are live.

## SUMMARY OF THE INVENTION

Area correlation of images or regions of images can be used directly to measure field distortions such as rotation, expansion, or shear once translation disparities have been removed between the pair of image regions. The present correlator design, and the method of employing it, allow relative field distortions to be applied between a pair of image regions as they are correlated. This method has applications to binocular stereo where it can be used to directly measure elevation gradients and surface curvature, to motion analysis where it can be used to directly measure flow field parameters such as divergence and curl, and to template matching where rotation and magnification can be measured without requiring multiple templates for the same object.

The system of this invention decouples the field distortion mechanism of the correlation process from the images that are correlated by allowing correlation windows to be specified on a point-by-point basis, rather than as rectangular regions. For example, in this system a 1000-point correlation would entail the storage of 1000-point pairs in a correlation window table having entries of the form: [(xa,ya), (xb,yb)]. The (xa,ya) point in the first window is compared with the (xb,yb) position in the second window, which might be on the same image or a different image depending on te application. Different offsets can be added to the positions in each window to position each of them over the desired part of the images being compared. In this way,it is possible to correlate against a particular type of distortion, such as rotation, by using several correlation window tables, each with a different amount of that distortion imposed between the corresponding pairs of points (xa,ya) and (xb,yb). These tables can be used to correlate distortions between stereo pairs of images, between motion sequences, between an image and a stored template, as well as in many other applications where image matching is done.

In the preferred embodiment one correlates the images by employing a Laplacian of Gaussian filter to extract information from each image. To carry out the correlation system, special purpose hardware has been developed for rapidly filtering the acquired pixel data. For commercial applications, it is essential that such filtering be performed in real time with relatively inexpensive apparatus. The system includes apparatus for collecting the desired pixel data, computing both the Laplacian and Gaussian of that data, and then correlating the sign of the result with other stored or acquired pixel data, all in real time.

## BRIEF DESCRIPTION OF THE DRAWINGS

Figure 1 is a block diagram illustrating a preferred system for correlating images to measure field distortion.

Figure 2a is a sample image which is to be correlated with another similar image of Figure 2b, which includes distortion relative to Figure 2a. Figure 2c is a superposition of Figures 2a and 2b.

Figures 3a and 3b are the images of Figure 2a and 2b after filtering to show the sign result of a Laplacian of Gaussian convolution operator. Figure 3c is the XOR of 3a and 3b showing (in black) locations that differ.

Figure 4 is the correlation function of Figure 3a when correlated with itself.

Figures 5a to 5d are curves illustrating the cross-correlations between Figures 3a and 3b against different variables.

Figure 6 is a block diagram illustrating one technique for collecting pixel values for computing the Laplacian at video rates.

Figure 7 is a block diagram illustrating one technique for obtaining the Laplacian of the pixel values collected in Figure 6.

Figure 8 is a block diagram of the basic computing element of one technique for obtaining a Gaussian convolution at video rates.

Figure 9 illustrates the repeated application of the technique of Figure 8 to compute a 7x7 two-dimensional Gaussian convolution of the Laplacian filtered signal from Figures 7 and 9.

Figure 10 is a block diagram illustrating the combining of the Laplacian with two 7x7 Gaussian elements to efficiently produce a 21x21 Gaussian of Laplacian convolution.

Figure 11 is a block diagram of the correlator hardware used to compare filtered images.

## DETAILED DESCRIPTION OF THE PREFERRED EMBODIMENTS

### Correlator System

In the preferred embodiment, the system of this invention may be employed in many different applications, for example, in stereo matching of pairs of images to determine surface elevation gradients, in measurement of flow field parameters by comparison of successive images in a time sequence of images, in inspection problems where a stored template is to be compared with an image distorted by magnification, shear or rotation, as well as other applications. Different types of images may be employed by the system, for example, range images in which an object is scanned with a laser beam offset from a camera or conventional intensity images. In the following discussion intensity images for detecting motion between two image frames are used for illustration. Below the method by which the field distortions are measured is first described, then the technique by which the images to be compared are individually processed, and then the apparatus for comparing the images.

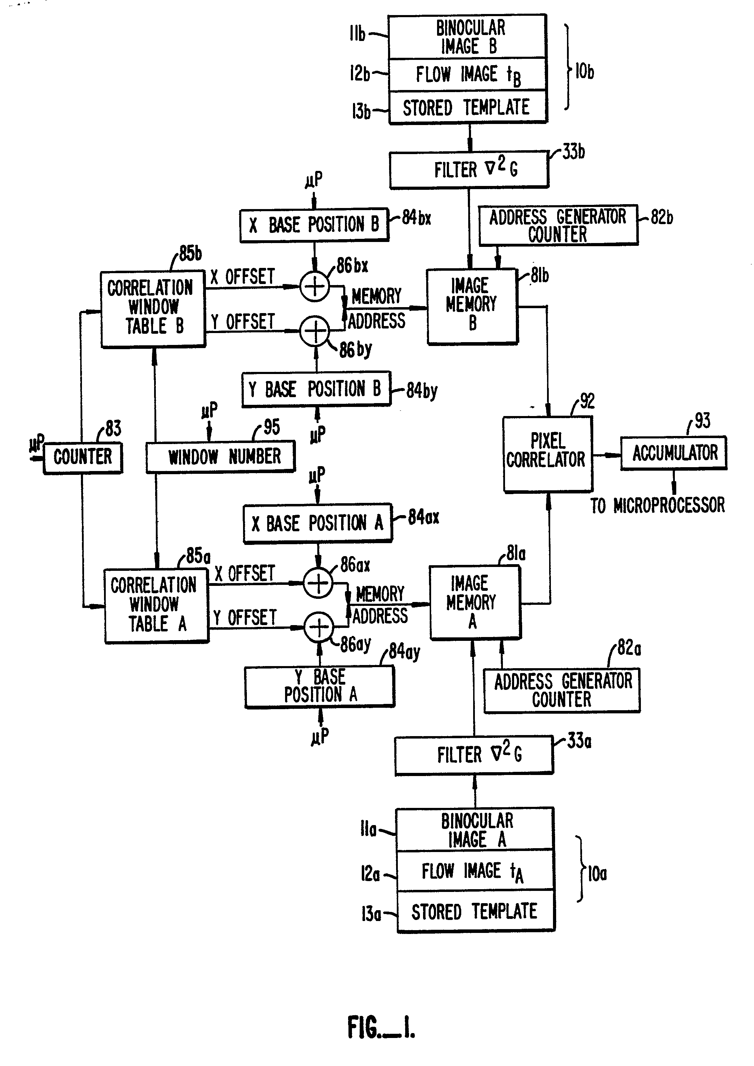

Figure 1 is a block diagram illustrating the overall correlation system. As shown in Figure 1, two images 10a and 10b are supplied as input information to the process. If the apparatus is to be applied to stereo matching to measure surface elevation gradients directly, then the images will be binocular images 11a and 11b taken from different viewpoints. Elevation gradients in the vertical direction--perpendicular to the axis of the stereo-camera pair--cause a horizontal shear between left and right images. An elevation gradient parallel to the axis of the camera pair creates a horizontal compression/expansion effect between left and right images. Thus, a correlation based stereo matching system measuring distortion can provide information about elevation gradients directly once translation disparities have been measured and nulled between the images. The technique can also be used to directly compensate for the disparity effects of nonplanar

3

surfaces, thereby providing a method of measuring surface topography in single measurements.

If flow field parameters such as curl and divergence important in the analysis of three-dimensional structure changes caused by motion are to be measured, then successive images 12a and 12b in time are compared, rather than images from a pair of stereo cameras. In this circumstance, while the interpretation of the field distortion information is different, the techniques for making the measurements are similar. Finally, if the apparatus is to be applied to inspection systems where a template 13a is compared with an image 13b which may be geometrically distorted by expansion, rotation, shear, etc., one of the images will be a stored template, and the other an acquired image of the object. As will be described, the distortions can be directly measured by correlation against each distortion parameter without requiring a large set of precomputed template variants for each type of distortion for each type of part.

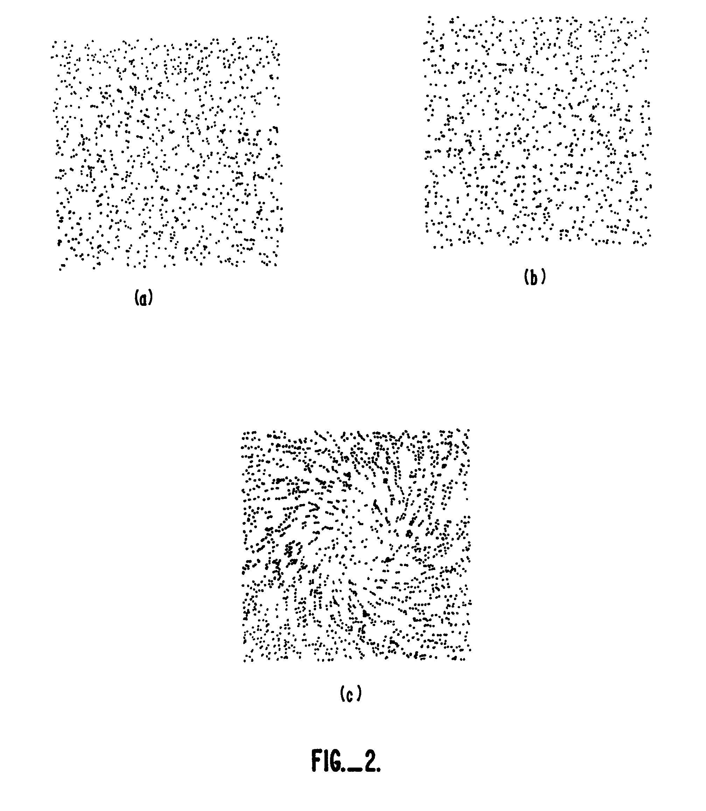

As a first step, in correlating pairs of images or image regions, the two images are each filtered to attenuate higher spatial frequencies while preserving some of the lower spatial frequencies. These steps are represented by filter blocks 33a and 33b. The filtering is described in more detail below in conjunction with Figures 2-4.

The resulting images are each stored, with the first image being stored in image memory A 81a and the other image stored in image memory B 81b. Typical storage units comprise static random access memories, which can be configured as dual-ported memories. Either storage 81a or 81b can be established once and then reused so long as the particular image is not changed. The locations in the image memories at which the images are stored is controlled by address generator counters 82a and 82b. The address generator counters 82 typically include a first counter for identifying a unique horizontal line, and a second counter for identifying a pixel position on that line. The addresses from which data in the memory 81 are read are controlled ultimately by counter 83 and x,y registers 84. X,y registers 84 provide information regarding the center point of a correlation window on the image. By varying the position of the window's center point, one image may be shifted with respect to the other, and the regions from each image can be selected. Counter 83 counts the number of points in a window stored in one memory to be compared with the other image data in the other memory, while correlation tables 85 provide information regarding the offset relative to the base position 84 of each image point to be compared within the window. The corresponding offsets in tables 85a and 85b can differ according to the type of distortion (such as rotation) against which a correlation measurement is to be made. Each table 85 supplies x and y offset values which are added to a base position to set the overall position of the window on the image. The values in these registers are also adjusted to cancel any translation disparities that exist between the A and B images at the window position. The resulting x and y positions together form a memory address which is sent to the image memory buffers 81. The image buffers supply pixel values which are correlated and the result is added to an accumulator 93. The offset tables 85 typically contain between 1000 and 4000 points for each correlation window.

The offsets are provided through a look-up table and index to each point in the correlation window. This allows comparison of any desired set of points in one image with any desired set of points in the other image, thereby allowing correcting for fixed geometric distortions between the two images and direct control over the correlation window shape. It also allows options such as placing more emphasis on the center of the correlation window by spacing the samples more closely near the center. Registers 84ax and 84bx store the base position for the X coordinate of tables A and B, while registers 84ay and 84by store the base position for the Y coordinate of tables A and B. The pixel correlator 92 is coupled to receive information from memories 81a and 81b, and in turn to supply the result of comparison to accumulator 93. There are many types of correlation that can be employed, for example, in the preferred embodiment, the image memories 81a and 81b store just the sign bit of the Laplacian of Gaussian convolution of the input images 10a and 10b. The correlator is an XOR gate while the accumulator 93 is a counter. A window number register 95 allows each of the correlation window table memories to store data for more than one window by enabling selection of a particular window.

The window tables described above allow flexibility in tailoring the shape of the correlation windows--for example, as a square, a circle, or a Gaussian scatter plot. This flexibility is discussed further below.

As an example, let the set of points $p_n = (x_n, y_n)$ for $1 \leq n \leq N$ define a window pattern. For example, the integer coordinate pairs could define a window such that $x_n^2 + y_n^2 < 20^2$. Then define the points $q_n = (u_n, v_n)$ for $1 \leq n \leq N$ where:

$u_n = f(x_n, y_n)$

$v_n = g(x_n, y_n)$

where the functions f and g define a mapping of the window points $p_n$ to a new set of window points $q_n$. The points ($p_n$) are loaded into table 85a of Figure 1 and the points ($q_n$) are loaded into table 85b, rounding the coordinate values to integral pixel locations as necessary.

A 31x31 pixel square correlation window setup to correlate against image rotations of $-10°$, $0°$, and $10°$ could be defined as follows:

$$p_1 = (-15, -15)$$

$$p_2 = (-14, -15)$$

$$\vdots$$

$$p_{961} = (15, 15)$$

Then using:
$f_\alpha(x,y) = x \cos(\alpha) - y \sin(\alpha)$
$g_\alpha(x,y) = x \sin(\alpha) + y \cos(\alpha)$
for $\alpha = -10°$ the following values for the other window are obtained:

$$q_1 = (-17, -12)$$

$$q_2 = (-16, -12)$$

$$\vdots$$

$$q_{961} = (17, 12)$$

## Processing of Individual Images

As described above, generally the image of the pattern or object to be compared with itself or with another image may be acquired using any desired technique, for example, with a vidicon, CCD camera, scanning electron microscope, range camera, or other apparatus. In some circumstances the images to be compared will be generated by the user of the system. For example, alignment targets for object alignment may be built from isolated fine scale marks. These fine marks can be spread out in a pattern in a two-dimensional array to form a target as shown in Figure 2a. The fine scale features may consist of small "dots" distributed in an array. In the example of Figure 2a (and 2b), the array consists of a matrix of 50x50 potential dot locations. The actual locations for dots in the array of 50x50 potential dots are randomly selected. For the example shown, the determination of whether to place a dot in a given location is made employing a random number generator with a fixed probability at each location. The pattern shown in Figure 2a is not repeating and has a large low frequency content of spatial information, that is, the dots and spaces tend to organize themselves into clusters. Figure 2b is an image of Figure 2a but which includes field distortion. For example, Figure 2b is the same pattern with a $2°$ rotation about its center and a 4% expansion. Figure 2c is the superposition of Figures 2a and 2b, and illustrates the spiral flow pattern of the combined fields.

Once the image(s) is acquired, for example, Figure 2a, it is digitized and a filtering operation is performed to enhance the low frequency structure in the pattern while attenuating the high frequency information. Although many different types of filters may be employed to enhance the low frequency structure, in the preferred embodiment a Laplacian of Gaussian ($\nabla^2$G) convolution operator is used. The Gaussian is a two-dimensional Gaussian which functions to low pass filter the image in a way that attenuates high spatial frequencies while preserving the geometric structure at lower spatial frequencies. The size of the Gaussian controls the scale at which structure remains in the filtered image. The Laplacian term detects locations in the low pass filtered image where local maxima in the rate of brightness change occur. These locations coincide closely with the locations where the Laplacian has zero value. It is known that:

$$(\nabla^2 G) * I \equiv \nabla^2 (G*I) \equiv G * (\nabla^2 * I) \qquad (1)$$

where $\nabla^2$ is the Laplacian, G is the Gaussian and I represents the image. Hence, the order in which the operators are applied will not effect the result.

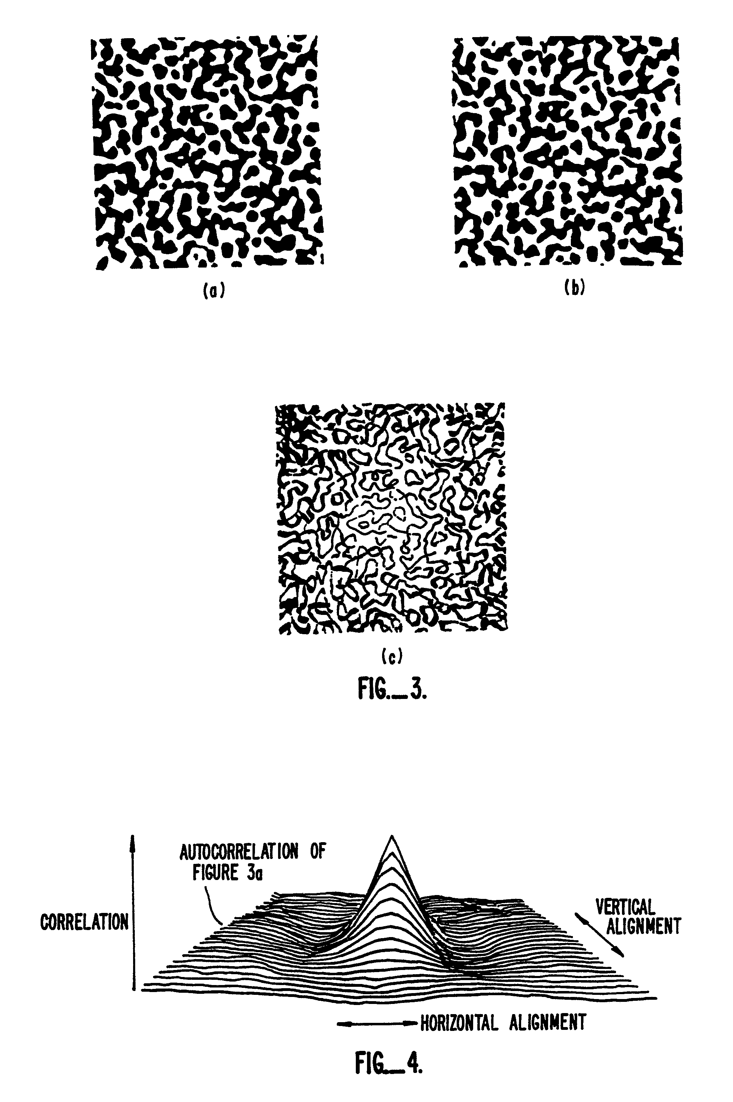

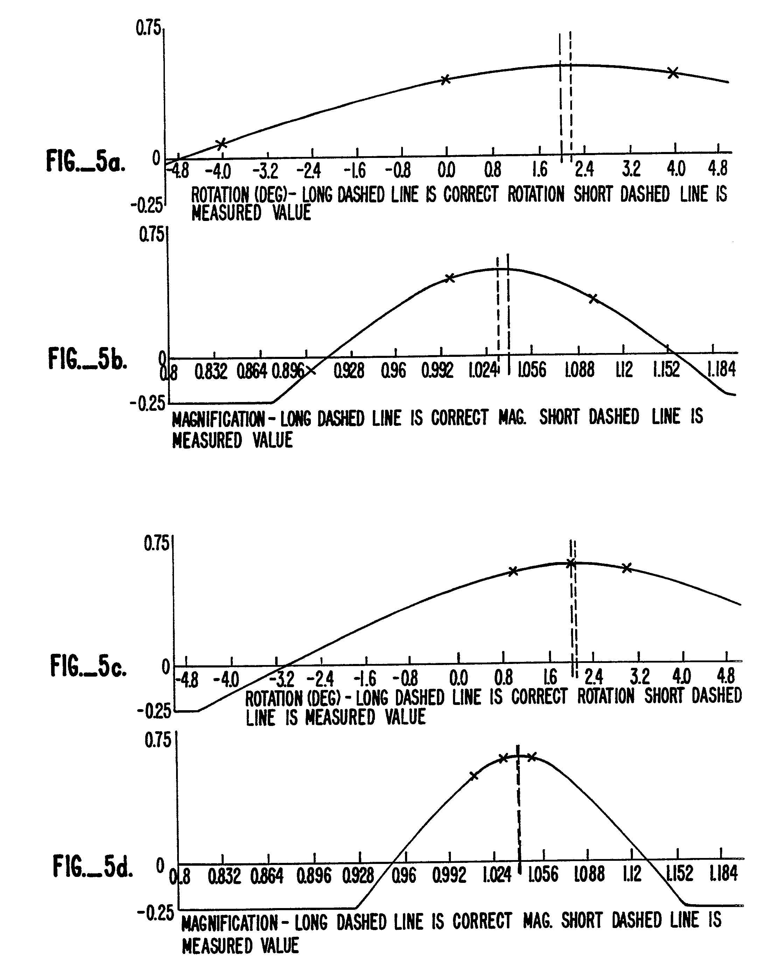

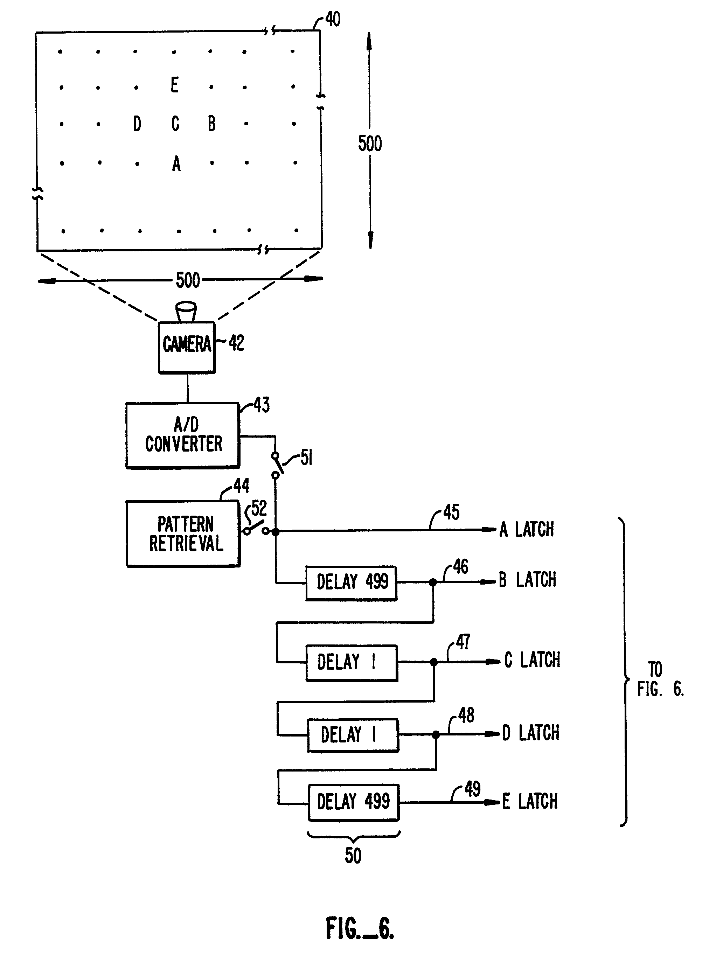

Application of the Laplacian of Gaussian convolution operator and taking the sign of the result creates the image of Figure 3a from that of Figure 2a, while Figure 3b corresponds to Figure 2b. The black regions of Figures 3a and 3b are locations where the sign of the filtered image is negative. Figure 3c shows the difference between Figure 3a and Figure 3b. The black areas are locations where the filtered result of the images in Figure 2a and 2b differ in sign. The center of Figure 3c is the most similar--little black--because the expansion and rotation centers are at the middle and have the least effect there. Further out from the middle of Figure 3c the relative motion between images increases linearly and more black is seen. The number of white pixels minus the number of black ones divided by the total number of pixels in Figure 3c is equivalent to the cross correlation measured between Figures 2a and 2b using the same correlation window on each image--that is, correlating with a magnification of 1.0 and rotation of 0 degrees.

It will be appreciated that once the images of Figures 2a and 2b are scanned and digitized, the filtering operation may be performed using a suitably programmed conventional general purpose digital computer. While this is feasible, the use of conventional digital computers is undesirably slow. Because commercial applications of the system compel alignment much more quickly, a processor with a special architecture may be employed to perform the necessary calculations.

There are several approaches for approximating the Laplacian of Gaussian convolution. For example, a difference of two Gaussian convolutions where the Gaussians have space constants $\sigma_e$ and $\sigma_l$ such that:

$$1 < \frac{\sigma_i}{\sigma_e} < 2 \qquad (2)$$

or so, and the Gaussians are normalized to have the same volume provides a very close approximation of the Laplacian of Gaussian convolution. The Laplacian of Gaussian convolution may also be considered as a bandpass filter because the Gaussian is a low-pass operation and the Laplacian a high-pass operation. Neither operation has very sharp roll-off to either side of the center frequency. Any filter with properties such as above will be appropriate for the approach described herein. Importantly, only the sign of the convolved signal is used, thereby relying upon the zero crossing locations of the convolution.

Applied to the images of Figure 2 with an operator diameter about ten times the dot separation or larger, this technique exhibits in its sign pattern structures correlated with the clustering structure of the original dot pattern and not with individual dots. Because the sign pattern is thus tied to the overall position of the dot pattern on the image surface, and not with any particular location for any finer feature, it is insensitive to small distortions such as fringe effects, blurring, interference, dirt, noise, etc., which are present in the imaging. Thus, coarse scale structure of the patterns is captured, yet in view of the relatively insensitivity to high frequency noise, it is ideally suited to electronically acquired images, which typically exhibit significant noise. These filtered images are stored in memories 81a and 81b.

When the images are retrieved from the memories, they are correlated. The correlation function of the sign of the Laplacian of Gaussian convolution can be estimated as follows: Let the image I(x,y) be a Gaussian random process with uniform spectrum and let

$$C(x,y) = \nabla^2 G * I(x,y) \qquad (3)$$

where * denotes a two-dimensional convolution. The correlation of C(x,y) when the image I(x,y) is taken to be Gaussian white noise has the form

$$R_C(r) = k \left[ 1 - \frac{4r^2}{w^2} + \frac{2r^4}{w^4} \right] \exp \left[ \frac{-2r^2}{w^2} \right] \qquad (4)$$

where k is a constant and W is the diameter of the negative central region of the $\nabla^2$G convolution function. The correlation $R_s(r)$ of the sign of Eq. (3), $S(x,y) = sgn[C(x,y)]$, obeys an arcsin law when C is a Gaussian random process.

$$R_S(\tau) = \frac{2}{\pi} \sin^{-1} \left[ \frac{R_C(\tau)}{R_C(0)} \right] \qquad (5)$$

Figure 4 shows the correlation function of the sign of a Laplacian of Gaussian convolution. As shown by Figure 4, when a pattern such as depicted in Figure 3a is compared with itself, a single strongly correlated location, corresponding to the peak of the cone in Figure 4, results. Misalignment, in any direction by any significant amount, results in a much lower correlation. The width of the base of the cone is controlled largely by the size of the filter employed, with larger filters providing broader cones. The sharpness of the peak is due to the binary nature of the filtered image. The use of the sign, rather than the raw convolution values, also causes the correlation peak to be normalized with a height of one in the absence of noise.

Although it may at first appear difficult to find the peak of the correlation when many field distortion parameters are unknown, it is often the case that the magnitude of these distortions is sufficiently small that they can be ignored when correlating against translation. Two examples where this occurs are motion analysis and binocular stereo. In motion analysis, successive images from a single camera are compared to measure translation and field distortions such as rotation and magnification. When the camera frame rate is sufficiently high compared with the speed of the objects viewed, the field distortions between successive frames will be small. Similarly, in binocular stereo, horizontal translation disparities can be large, but vertical disparities, horizontal compression and vertical shear distortions are generally small. The latter two distortions are directly related to horizontal and vertical range gradients, respectively.

In such circumstances, by searching for the multi-dimensional correlation peak position in a logical manner, only a few tries are often necessary to achieve a close approximation to the translation disparity and field distortion parameters. For example, a first search can be made to find the translation disparity between the two images assuming no field distortion. Once the proper alignment between the two images is found, adjustments can be made to the contents of the base position registers 84 to null out translation disparities between the two images stored in 81a and 81b.

With translation disparities nulled, the correlation window tables can be changed to measure each independent field distortion of interest separately, assuming all other field distortions are zero. For example, to measure the magnitude of a small rotation between the two images, three correlations can be carried out, one imposing a negative rotation, one a zero rotation, and the third a positive rotation between the images. Because the correlation peaks are fairly broad and the extent of correlation at one or more of these points will be greater than at other points, the values at these three points on the rotation axis can be used to estimate the position of the actual peak provided it lies within the span of the three measurements. Subsequent measurements may then be made to more precisely pinpoint the location of that peak.

Similarly, other independent field distortions such as magnification, vertical or horizontal shear, vertical or horizontal compression, can be measured individually. In the preferred embodiment, five correlation measurements can be measured simultaneously, making possible the measurement of pairs of field distortions, such as magnification and rotation, together.

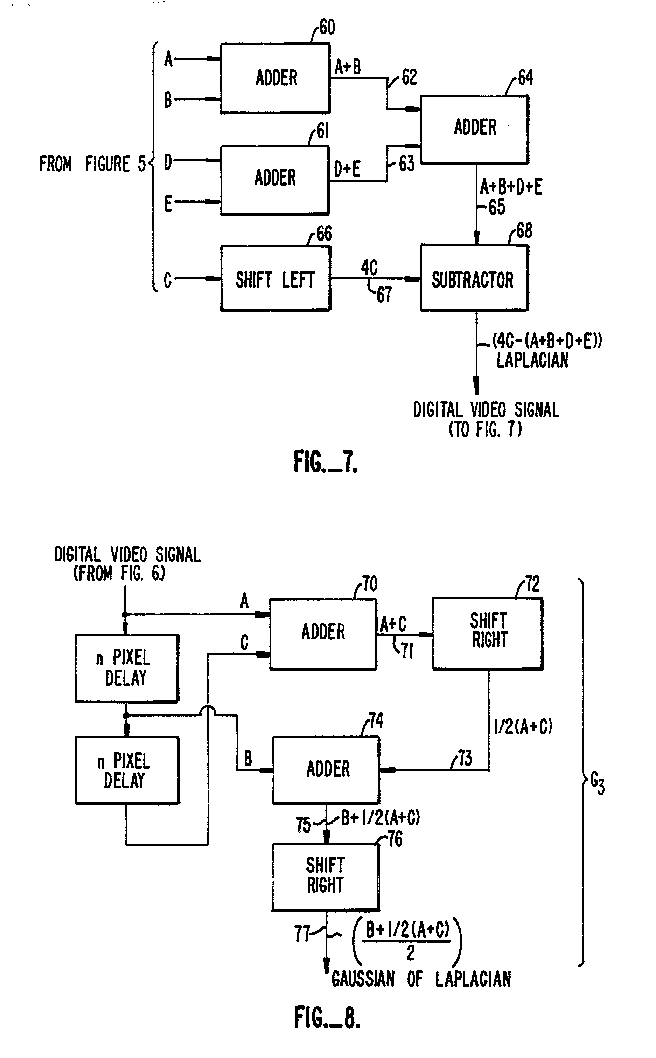

Figure 5a is a plot which shows the extent of correlation between Figures 3a and 3b using configurable window rotations of -4°, 0° and 4°. Each of these points is represented by an "X" in Figure 5a. A quadratic function is used to fit to the data points to create the curve shown. The dashed vertical line in Figure 5a indicates the position of the peak of the curve, while the heavier line next to it represents the position of the actual amount of rotation between the two patterns (2°). Figure 5b shows similar results for correlations against magnifications of 0.9, 1.0 and 1.1 while holding the rotation constant at 0°.

Figure 5c presents three cross-correlations taken between Figures 3a and 3b using rotations of 1°, 2° and 3° with a magnification of 1.0. Figure 5d presents similar results for magnifications of 1.01, 1.03 and 1.05.

## Image Processing Apparatus

As mentioned above, to carry out this method in a practical or commercial context, the images acquired or retrieved likely will need to be processed much more rapidly than a general purpose digital computer would permit. Accordingly, certain special purpose hardware is employed for performing the filtering functions, enabling them to be performed very quickly.

In the case of either retrieval of a stored pattern or acquisition of an image through optical means, a digital representation of the image is required. Thus, for analog images the image must first be digitized using, for example, a commercially available A/D converter operating at video rates. For explanation, assume that in the preferred embodiment, the pattern to be filtered is displayed in an area of approximately 500x500 pixels.

Once the digitized pixel pattern has been acquired, the Laplacian function is applied. Although either the Laplacian or Gaussian functions could be applied first without affecting the result, application of the Laplacian function first provides certain advantages. In particular, by applying the Laplacian function first, the video signal is centered on zero and then smoothed. This allows better use of n bit integer resolution because the n bit numbers are not required to characterize as wide a range of signal as would exist were the Gaussian function applied first. Applying the Laplacian first reduces the amount of scaling required through the Gaussian pipeline to keep the convolution values in range.

Convolving with a seven-point normalized Gaussian operator reduces the amplitude of a typical Laplacian filtered image by about a factor of two. Therefore, the shift is one less bit right for each seven-point Gaussian operator. In other words, the amplitude of the output signal is boosted by a factor of two after application of each seven-point Gaussian operator. In terms of the hardware required, this allows a gain of one bit of precision with each subsequent seven-point Gaussian operator. Thus, in a preferred system having four such operators, four bits are gained, or equivalently four bits are saved in the pipeline data width while obtaining the same precision in the final output.

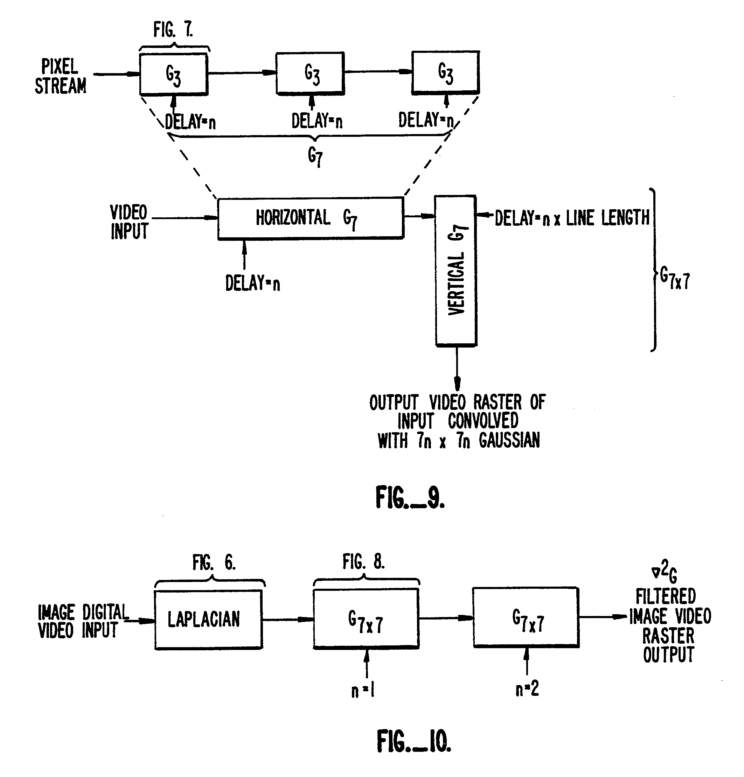

The 500-pixel square image 40 is shown at the top of Figure 6. If the Laplacian function is to be applied to pixel C, then the 8-bit binary value for each of pixels A-E must be retrieved and appropriately weighted. The apparatus of Figure 6 illustrates one technique for retrieving the desired pixels. As the desired pattern is acquired as a noninterlaced video raster scan, either from memory 44 or from camera 42 and A-D converter 43, at some given instant pixel A will be supplied on line 45. At that time, line 46 will carry B, the value received 499 pixels earlier. Similarly, lines 47, 48, and 49 will hold pixels C, D, and E, respectively, which were received 500, 501, and 1000 pixels earlier than A. Thus, this configuration produces five simultaneous samples making a cross pattern from the image, as shown at the top of Figure 6. When the next pixel arrives on line 45, the entire cross pattern of samples will move one pixel to the right on the image following the raster scan. As the value for each pixel is retrieved, it may be latched before being supplied to subsequent processing. The delay elements 50 shown in Figure 6 may comprise any known delay elements, for example, a shift register or a random access memory. Switches 51 and 52 control whether the pixels latched are from a retrieved pattern 44 or an acquired image 40.

Figure 7 illustrates apparatus for obtaining the Laplacian of the acquired pixel values. A satisfactory approximation to the Laplacian function at a given pixel location is to apply a weight of 4 to that particular pixel and a weight of -1 to the pixels above, below, to the left, and to the right of the specified pixel. As shown in Figure 7, the pixel values for pixels A and B are supplied to adder 60, while those for pixels D and E are supplied to adder 61. As a result, adder 6D supplies an output signal A + B on line 62, while adder 61 supplies an output signal D + E on line 63. Another adder 64 connected to receive the signals on line 62 and 63 then supplies an output signal on line 65 indicative of the sum of all of pixels A, B, D, and E.

The pixel value for pixel C is supplied to a shifter 66. By shifting the pixel value two places left, the value is effectively multiplied by four, and the results supplied on line 67 to subtractor 68. Subtractor 68 combines the sum supplied on line 65 with the quadruply-weighted value on line 67 to achieve a new value which approximates the Laplacian at pixel C of the input image. Thus, the output 68 carries a video raster signal of the Laplacian of the input image. This signal is fed to the next stage of processing, the Gaussian convolver.

The manner by which the Gaussian convolution is applied is shown in Figures 8 and 9. In the preferred embodiment, the fact that a two-dimensional Gaussian convolution can be decomposed into a composition of one-dimensional Gaussian convolutions is employed.

This is because the two-dimensional Gaussian can be written as the product of two one-dimensional Gaussians:

$$G(x,y) = \exp\left[-\frac{x^2+y^2}{\sigma^2}\right]$$

$$= \exp\left[-\frac{x^2}{\sigma^2}\right]\exp\left[-\frac{y^2}{\sigma^2}\right]$$

$$= G(x)G(y)$$

This allows decomposing the two-dimensional convolution integral as follows:

$$G(x,y)*I(x,y) = \int_{-\infty}^{\infty}\int_{-\infty}^{\infty} G(u,v)I[(x-u),(y,v)]dudv$$

$$= \int_{-\infty}^{\infty} G(v)\int_{-\infty}^{\infty} G(u)I[(x-u),(y-v)]dudv$$

$$= G(y)*[G(x)*I(x,y)]$$

where $I(x,y)$ is the input image to be convolved.

Thus, a two-dimensional Gaussian convolution is achieved by means of two cascaded one-dimensional convolutions which are much less expensive computationally to accomplish. The one-dimensional Gaussian operator may be approximated by a binomial distribution in one dimension. For example, the seven-point binomial distribution 1, 6, 15, 20, 15, 6, 1 is quite close to the Gaussian. In the preferred embodiment, a three-point binomial operator is employed with weights of 1, 2, 1 three times to produce the effect of a convolution with the seven point binomial distribution. This choice allows a particularly efficient hardware implementation.

Figure 8 illustrates the operation of the three-point mechanism, $G_3$. A digital raster input is applied to the input of two serially-connected delay elements. These delay elements will both introduce a delay of n pixels between their input and output terminals, where n equals one or two pixels for horizontal convolutions and u equals the image line length or twice the image line length for vertical convolutions. From these delay elements we obtain three simultaneous values A, B, and C separated by n pixels from each other in the image. A and C are applied to adder 70 and the sum supplied on line 71 to a shifter 72. Shifter 72 shifts the sum of A + C one place to the right, in effect dividing it by two. The output signal on line 73 is supplied to adder 74 in conjunction with the binary value for pixel B. Adder 74 thereby provides on line 75 a value equal to the sum of the value of pixel B plus one-half the sum of values of pixels A and C. To maintain correct amplitude, this result is shifted right one place by shifter 76, and the result supplied on line 77. The result on line 77 is the input signal smoothed by a three-point binomial distribution. To obtain a finer approximation to the Gaussian, the procedure of Figure 8 may be repeated more than once as shown in Figure 9.

Figure 9 illustrates how a pipeline of three Gaussian convolution three-point elements $G_3$ of Figure 6 is configured. This device convolves the input video stream with a 7-point binomial approximation to a one-dimensional Gaussian $G_7$. If the delay elements are set to produce a delay of one pixel, this will provide a horizontal Gaussian convolution. If the delay elements are set to the line length of the image, this will provide a vertical convolution. One of the $G_3$ operators of each $G_7$ operator does not include the normalization operation for the reasons discussed above.

To accomplish a 7x7 two-dimensional Gaussian convolution, two $G_7$ elements, one with delay set for a horizontal convolution and the other with delay set for a vertical convolution are used. The lower portion of Figure 8 illustrates my technique using a pipeline of two $G_7$ elements to produce a $G_{7x7}$ element. In practice, a larger Gaussian filter than the 7x7 operator described is required. Similar techniques as described above could be used to build arbitrarily large filters; however, there is a more efficient approach. After the application of the $G_{7x7}$ filter, the input signal has been low pass filtered sufficiently that a subsequent operator that samples only every other pixel will not suffer from aliasing problems. Thus, a 14x14 Gaussian convolution can be approximated by the $G_{7x7}$ operator with its points spread out by increasing its horizontal delays from one to two pixels and its vertical delays from one line length to two line lengths.

Figure 10 shows two $G_{7x7}$ elements configured in this way to produce effectively a 21x21 Gaussian convolution operator in a video pipeline with the Laplacian operator at the start. The result is a $\nabla^2 G$ filtered image. This image may be supplied to suitable storage means, for example, a random access memory such as described in conjunction with block 81 of Figure 1. Because only the sign of the result is saved, the filtered image will be a binary one, having the appearance, for example, of Figure 3.

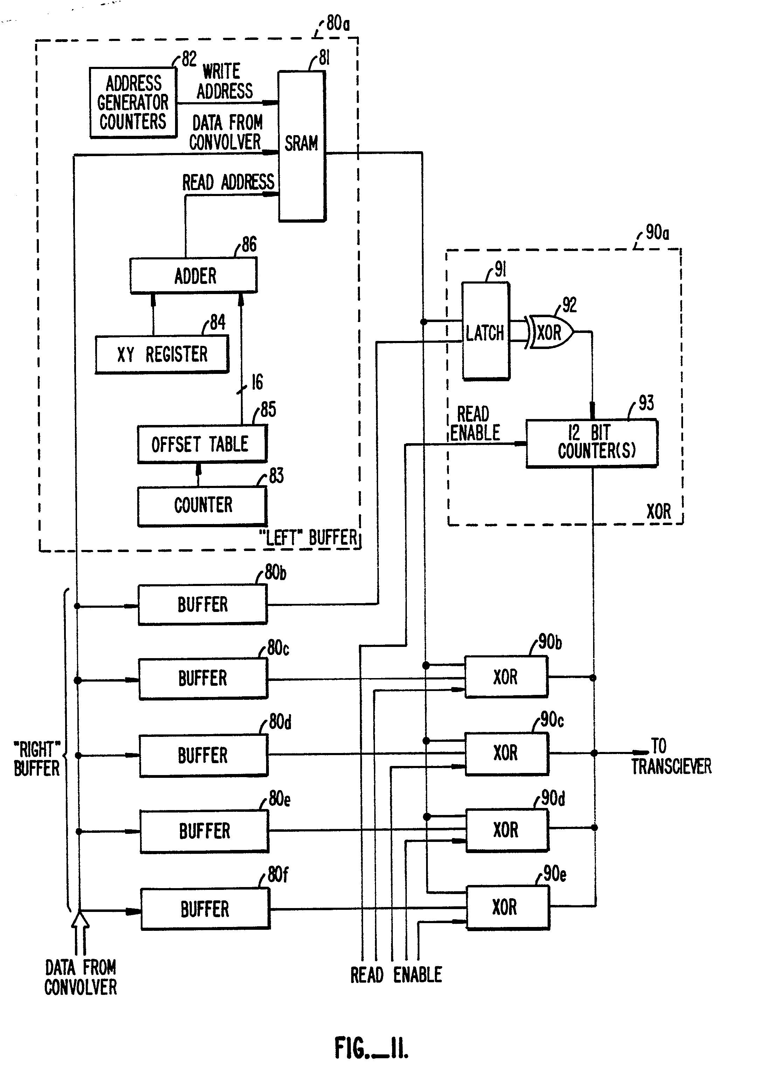

Figure 11 is a more detailed block diagram of one embodiment of the correlator previously shown in block form in Figure 1. Generally, the components shown in Figure 11 are driven by a 10-megaHertz pixel clock. On the rising edge pixel data is stored into the image memories, while on the falling edge pixel data is read out. In the preferred embodiment the filtered image input data (from Figure 10) is supplied in parallel to six buffer networks 80a-80f shown in Figure 11. The contents of one of the buffers 80a is shown in greater detail; similar components make up each of the remaining buffers 80b-80f. Buffer 80 includes a 64k-by-1 bit memory 81 for storing approximately one-quarter of the image. In the preferred embodiment memory 81 is a static random access memory and stores 256x256 pixels of data. The choice of the size of memory 81 is arbitrary, and larger or smaller memories may be employed depending upon the particular application for the correlator of Figure 11. Storage of the convolver output data in memory 81 allows scanning of the contents of the memory for purposes of image correlation.

The data from the convolver are supplied both to the left buffer 80a and the right buffers 80b-80f. Typically, the left buffer, 80a, will be filled with convolver data from one image. The right buffers would then be filled with convolver data from the other image. The use of six buffers allows five values to be generated by the exclusive OR networks 90a-90e during each cycle. The left buffer allows one image to be used for comparison, while the five right buffers allow five locations in the other image to be examined in parallel. These five ports onto the image allow five points on the same correlation surface to be computed in parallel.

Each of the exclusive OR networks 90a-90e contains a latch 91, an exclusive OR gate 92, and one or more counters depending upon the number of bits of counting desired. Latch 91 holds the output value from the left buffer and one of the right buffers (depending upon which exclusive OR network) and supplies the resulting data to the exclusive OR gate 92. OR gate 92 drives desired counters to provide as many bits of accuracy as desired. In the preferred embodiment a 12-bit counter 93 is provided by three smaller 4-bit counters. Read enable lines coupled to the counters 93 enable supplying the output from a desired counter to a transceiver (not shown).

Although preferred embodiments of the method of the invention have been described above, these embodiments are for the purposes of illustration and not limitation. The scope of the invention may be determined from the appended claims.

## Claims

1. A method of correlating a first image region with a second image region wherein one of the regions is distorted with respect to the other, the method comprising:

storing digital representations of pixel values the first and second images in first and second image storage means, respectively;

storing digital representations of first and second correlation windows in first and second window storage means, respectively, each of the correlation windows defining a set of points independent of the first and second images;

storing base position information for locating a base position of the first and second correlation windows in first and second base position storage means, respectively;

comparing the first image region with the second image region by:

combining the first correlation window with the first base position to provide a first set of addresses for reading pixel values from the first image memory,

combining the second correlation window with the second base position to provide a second set of addresses for reading pixel values from the second image memory, and

correlating the pixel values read from the first image memory with the pixel values read from the second image storage means.

2. A method as in Claim 1 wherein the digital representations of the first and second correlation windows comprises:

a first set of coordinate information defining locations of each one of a plurality of points in the first correlation window; and

a second set of coordinate information defining locations of each one of a plurality of points in the second correlation window.

3. A method as in Claim 2 wherein:

the first set of coordinate information comprises a plurality of pairs of coordinates, each pair defining a point in the first correlation window; and

a second set of coordinate information comprises a plurality of pairs of coordinates, each pair defining a point in the second correlation window.

4. A method as in Claim 2 wherein the step of storing base position information comprises storing information to provide first and second center point locations for each of the first and second correlation windows, respectively.

5. A method as in Claim 4 wherein:

the step of combining the first correlation window comprises adding the center point location to each point in the first correlation window; and

the step of combining the second correlation window comprises adding the center point location to each point in the second correlation window.

6. A method as in Claim 1 wherein the step of storing digital representations of first and second correlation windows comprises:

storing a plurality of first correlation windows in the first window storage means; and

storing a plurality of second correlation windows in the second window storage means.

7. A method as in Claim 6 wherein the step of comparing further comprises selecting one from each of the plurality of first and second correlation windows.

8. A method as in Claim 7 wherein the step of selecting comprises

storing correlation window identifying information in a window number storage means; and

supplying the identifying information to each of the first and second window storage means.

9. A method as in Claim 1 wherein the step of correlating the pixel values comprises supplying a pixel value from the first image storage means to a first terminal of a correlator and supplying a pixel value from the second image storage means to a second terminal of a correlator.

10. A method as in Claim 9 wherein the correlator comprises a logic gate.

11. A method as in Claim 10 wherein the logic gate is an exclusive OR gate.

12. A method as in Claim 2 wherein the plurality of points in the first correlation window forms a pattern.

13. A method as in Claim 12 wherein the plurality of points in the second correlation window forms a transformation of the points in the first correlation window.

14. A method as in Claim 1 wherein the step of correlating comprises:

transforming the second correlation window by a series of fixed amounts of a transformation parameter and measuring the correlation at each to provide a corresponding series of correlations; and

interpolating the correlations to estimate a value for the correlation parameter.

15. A method as in Claim 1 wherein the digital representations of pixel values are sign bits of Laplacian of Gaussian convolutions.

FIG._I.

(a)

(b)

(c)

FIG._2.

(a)

(b)

(c)

FIG.__3.

CORRELATION

AUTOCORRELATION OF
FIGURE 3a

VERTICAL
ALIGNMENT

HORIZONTAL ALIGNMENT

FIG.__4.

EP 0 353 644 A2

**FIG._5a.**

ROTATION (DEG)- LONG DASHED LINE IS CORRECT ROTATION SHORT DASHED LINE IS MEASURED VALUE

**FIG._5b.**

MAGNIFICATION - LONG DASHED LINE IS CORRECT MAG. SHORT DASHED LINE IS MEASURED VALUE

**FIG._5c.**

ROTATION (DEG) - LONG DASHED LINE IS CORRECT ROTATION SHORT DASHED LINE IS MEASURED VALUE

**FIG._5d.**

MAGNIFICATION - LONG DASHED LINE IS CORRECT MAG. SHORT DASHED LINE IS MEASURED VALUE

FIG._6.

FROM FIGURE 5 {
A → ADyDER /60 → A+B /62
B →
D → ADyDER /61 → D+E /63
E →
} → ADDER /64 → A+B+D+E /65

C → SHIFT LEFT /66 → 4C /67 → SUBTRACTOR /68 → (4C-(A+B+D+E)) LAPLACIAN

DIGITAL VIDEO SIGNAL
(TO FIG. 7)

**FIG._7.**

DIGITAL VIDEO SIGNAL
(FROM FIG. 6)

A → ADDER /70 → A+C /71 → SHIFT RIGHT /72

n PIXEL DELAY → C

n PIXEL DELAY → B → ADDER /74 → B+1/2(A+C) /75

SHIFT RIGHT → 1/2(A+C) /73

SHIFT RIGHT /76

$$77 \quad \left( \frac{B + 1/2(A+C)}{2} \right)$$

GAUSSIAN OF LAPLACIAN

$G_3$

**FIG._8.**

FIG. 7.

PIXEL STREAM → [ G3 ] → [ G3 ] → [ G3 ]

DELAY=n    DELAY=n    DELAY=n

G7

VIDEO INPUT → [ HORIZONTAL G7 ] → [ VERTICAL G7 ] →DELAY=n x LINE LENGTH

DELAY=n

G7x7

OUTPUT VIDEO RASTER OF
INPUT CONVOLVED
WITH 7n x 7n GAUSSIAN

FIG._9.

FIG. 6.        FIG. 8.

$\nabla^2 G$
FILTERED
IMAGE VIDEO
RASTER
OUTPUT

IMAGE DIGITAL VIDEO INPUT → [ LAPLACIAN ] → [ G7x7 ] → [ G7x7 ] →

n=1        n=2

FIG._10.

EP 0 353 644 A2

FIG._II.